# EUROPEAN PATENT SPECIFICATION

(11) **EP 3 495 690 B1**
(45) Date of publication and mention of the grant of the patent: **31.08.2022**
(21) Application number: 16911609.2
(22) Date of filing: 03.08.2016
(51) Int. Cl.: F16D 41/061, H02K 7/06, F16H 25/20, F16H 25/24, F16H 49/00

(54) **CONVEYING DEVICE**
FÖRDERVORRICHTUNG
DISPOSITIF DE TRANSPORT

(43) Date of publication of application: 12.06.2019
(73) Proprietor: Azbil Corporation, Chiyoda-ku Tokyo 100-6419 (JP)
(72) Inventor: BEPPU, Hisashi, Tokyo 100-6419 (JP)
(74) Representative: Lavoix
(86) International application number: PCT/JP2016/072796
(87) International publication number: WO 2018/025348

(56) References cited:
- WO-A1-2016/067872
- DE-A1- 4 006 446
- DE-A1-102013 202 298
- GB-A- 1 457 480
- JP-A- H11 278 663
- JP-A- H11 314 756
- JP-A- 2002 089 649
- JP-A- 2002 089 649
- JP-A- 2005 169 163
- JP-U- S4 730 613
- JP-U- S6 173 994
- JP-U- S61 193 047
- US-A- 5 913 401

## Description

The present invention relates to a transfer technique, more particularly to a transfer apparatus.

### Background Art

In a transfer apparatus using magnetic screws, a male magnetic screw made of a magnetic material is rotated to move a female magnetic screw such as a nut made of a magnetic material in a direction of a central axis of the male magnetic screw. A transfer member on which an article to be transferred is disposed is fixed to the female magnetic screw. The transfer member also moves in the direction of the central axis of the male magnetic screw together with the movement of the female magnetic screw.

The male magnetic screw may be divided into a plurality of male magnetic screws and then they may be disposed. In this case, the female magnetic screw moves across the plurality of male magnetic screws. However, the female magnetic screw cannot move across the gaps between the male magnetic screws smoothly unless the interval between adjacent male magnetic screws is set appropriately. For example, PTL 1 proposes that the interval between the male magnetic screws is set to a multiple of the double of the pitch of the magnetized patterns of the male magnetic screws.

JP 2002-089649 A discloses a transfer apparatus. The transfer apparatus comprises a first magnet screw a second magnetic screw. A lower slider is provided with a female magnetic thread. Further, there is provided a female magnetic screw to which an upper slider is attached. A rotation generation is provided with fixed block. Further, there is a motor for driving the first magnetic screw.

DE 10 2013 202298 A1 relates to a pump comprising a shaft with a coupling device.

GB 1 457 480 relates to a shaft coupling having a coupling element of a harvesting device.

US 5,913,401 relates to a magnetic screw device having magnetic screws being joint with a support shaft. JP H11 278663 discloses a similar magnetic screw.

WO 2016067872 A1 relates to a temperature management apparatus is provided with: a temperature management furnace 1 having a space in which an article 5 is disposed and temperature is managed; bar-like members containing a magnetic material; facing members, each of which faces a part of the side surface of each of the bar-like members. Further, there is provided a conveyor base including moving rod members.

### Citation List

### Patent Literature

PTL 1: JP-A-2002-68476

### Summary of Invention

### Technical Problem

In the transfer apparatus disclosed in PTL 1, adjacent male magnetic screws are disposed at predetermined intervals and the adjacent male magnetic screws are not coupled to or separated from each other. However, adjacent male magnetic screws are preferably coupled to or separated from each other in some cases. Therefore, one object of the invention is to provide a transfer apparatus in which rod-shaped members such as male magnetic screws can be coupled to or separated from each other.

### Solution to Problem

According to an aspect of the invention, there is provided a transfer apparatus according to claim 1.

In the transfer apparatus described above, the first and second couplers may be coupled to each other by bringing the first and second rod-shaped members close to each other while rotating at least one of the first and second rod-shaped members.

In the transfer apparatus described above, the first and second couplers may have spiral structures that engage with each other.

A spiral curved surface of the spiral structure of one of the first and second couplers of the transfer apparatus described above may be provided with a projection portion and a spiral curved surface of the spiral structure of the other of the first and second couplers may be provided with a concave portion into which the projection portion is inserted.

In the transfer apparatus described above, the first and second couplers may have first flat surfaces that are parallel with directions of the central axes of the first and second rod-shaped members and oriented to a first rotational direction of the first and second rod-shaped members and second flat surfaces that are parallel with the directions of the central axes of the first and second rod-shaped members and oriented to a second rotational direction of the first and second rod-shaped members.

In the transfer apparatus described above, the first and second couplers may have engagement structures that engage with each other and at least one of the first and second couplers may have an elastic member that contracts when the first and second couplers come into contact with each other and the first and second couplers do not engage with each other.

In the transfer apparatus described above, the first and second couplers may have engagement structures that engage with each other and the engagement structures may change a relative angle between the first and second couplers using at least one of an attraction force between different magnetic poles and a repulsion force between identical magnetic poles. Each of the first and second couplers may have a convex surface having a first magnetic pole and a concave surface having a second magnetic pole.

In the transfer apparatus described above, the first and second rod-shaped members and the opposite member may include hard magnetic materials and, when the number of poles of each, the first or second rod-shaped member and the opposite member is 2n (where n represents a natural number), the first and second couplers may be configured to be couplable to each other every relative rotation by 360 × m/n degrees (where m represents a natural number).

In the transfer apparatus described above, one of the first and second rod-shaped members and the opposite member may include a hard magnetic material and the other may include a soft magnetic material and, when the number of poles of each, the first or second rod-shaped member and the opposite member is 2n (where n represents a natural number), the first and second couplers may be configured to be couplable to each other every relative rotation by 180 × m/n degrees (where m represents a natural number).

In the transfer apparatus described above, the first rod-shaped member may be disposed in a furnace. The furnace may be a temperature-controlled furnace having a temperature-controlled space. The temperature-controlled furnace may be a freeze drying furnace. Alternatively, the furnace may be a cleaning furnace having a cleanliness-controlled space. Alternatively, the furnace may be a vacuum furnace having a vacuum-evacuated space.

The transfer apparatus described above may further include a transfer member for transferring an article, which is fixed to the opposite member. In the transfer apparatus described above, when the driving device rotates the first and second rod-shaped members, the opposite member may move along the central axes of the first and second rod-shaped members and the transfer member fixed to the opposite member may move. The article may include a medicine.

In the transfer apparatus described above, the first and second couplers may be coupled to each other when the furnace is opened and the first and second couplers may be separated from each other when the furnace is closed.

The transfer apparatus described above may further include a base member, a table positioned on the base member, a table movement rod-shaped member that includes a magnetic material, a table movement opposite member that is opposed to a part of a side surface of the table movement rod-shaped member and includes a magnetic material, and a table driving device that rotates the table movement rod-shaped member or the table movement opposite member about a central axis of the table movement rod-shaped member, changes a relative position between the table movement rod-shaped member and the table movement opposite member, and moves the table and the second rod-shaped member may be disposed on the table.

In the transfer apparatus described above, when the table driving device rotates the table movement rod-shaped member, the table movement opposite member may move along the central axis of the table movement rod-shaped member and the table fixed to the table movement opposite member and the second rod-shaped member disposed on the table may move. Alternatively, when the table driving device rotates the table movement opposite member, the table movement rod-shaped member may move in a direction of the central axis and the table fixed to the table movement rod-shaped member and the second rod-shaped member disposed on the table may move.

In the transfer apparatus described above, the table may come close to the furnace to couple the first and second couplers to each other or the table may be separated from the furnace to separate the first and second couplers from each other.

The transfer apparatus described above may further include a wheel provided in the base member.

### Advantageous Effects of Invention

According to the invention, it is possible to provide a transfer apparatus in which rod-shaped members such as male magnetic screws can be coupled to or separated from each other.

### Brief Description of the Drawings

[Fig. 1] Fig. 1 is a schematic plan view illustrating a transfer apparatus according to a first embodiment of the invention.
[Fig. 2] Fig. 2 is a schematic side view illustrating the transfer apparatus according to the first embodiment of the invention.
[Fig. 3] Fig. 3 is a schematic view illustrating a rod-shaped member and an opposite member according to the first embodiment of the invention.
[Fig. 4] Fig. 4 is a schematic plan view illustrating the transfer apparatus according to the first embodiment of the invention.
[Fig. 5] Fig. 5 is a schematic side view illustrating the transfer apparatus according to the first embodiment of the invention.
[Fig. 6] Fig. 6 is a schematic view illustrating a coupler according to the first embodiment of the invention.
[Fig. 7] Fig. 7 is a schematic view illustrating the coupler according to the first embodiment of the invention.
[Fig. 8] Fig. 8 is a schematic view illustrating the coupler according to the first embodiment of the invention.
[Fig. 9] Fig. 9 is a schematic view illustrating the coupler according to the first embodiment of the invention.
[Fig. 10] Fig. 10 is a schematic view illustrating the coupler according to the first embodiment of the invention.
[Fig. 11] Fig. 11 is a schematic view illustrating a coupler according to a second embodiment of the invention.
[Fig. 12] Fig. 12 is a schematic view illustrating the coupler according to the second embodiment of the invention.
[Fig. 13] Fig. 13 is a schematic view illustrating the coupler according to the second embodiment of the invention.
[Fig. 14] Fig. 14 is a schematic view illustrating a coupler according to a third embodiment of the invention.
[Fig. 15] Fig. 15 is a schematic view illustrating the coupler according to the third embodiment of the invention.
[Fig. 16] Fig. 16 is a schematic view illustrating the coupler according to the third embodiment of the invention.
[Fig. 17] Fig. 17 is a schematic view illustrating the coupler according to the third embodiment of the invention.
[Fig. 18] Fig. 18 is a schematic view illustrating the coupler according to the third embodiment of the invention.
[Fig. 19] Fig. 19 is a schematic view illustrating the coupler according to the third embodiment of the invention.
[Fig. 20] Fig. 20 is a schematic view illustrating the coupler according to the third embodiment of the invention.
[Fig. 21] Fig. 21 is a schematic view illustrating the coupler according to the third embodiment of the invention.
[Fig. 22] Fig. 22 is a schematic view illustrating a coupler according to a fourth embodiment of the invention.
[Fig. 23] Fig. 23 is a schematic view illustrating the coupler according to the fourth embodiment of the invention.
[Fig. 24] Fig. 24 is a schematic view illustrating the coupler according to the fourth embodiment of the invention.
[Fig. 25] Fig. 25 is a schematic view illustrating a coupler according to a fifth embodiment of the invention.
[Fig. 26] Fig. 26 is a schematic view illustrating the coupler according to the fifth embodiment of the invention.
[Fig. 27] Fig. 27 is a schematic view illustrating a rod-shaped member and an opposite member according to a first modification of the embodiment of the invention.
[Fig. 28] Fig. 28 is a schematic view illustrating a rod-shaped member and an opposite member according to the first modification of the embodiment of the invention.
[Fig. 29] Fig. 29 is a schematic cross-sectional view illustrating a rod-shaped member and an opposite member according to a second modification of the embodiment of the invention.
[Fig. 30] Fig. 30 is a schematic cross-sectional view illustrating a rod-shaped member and an opposite member according to the second modification of the embodiment of the invention.
[Fig. 31] Fig. 31 is a schematic cross-sectional view illustrating a rod-shaped member and an opposite member according to the second modification of the embodiment of the invention.

### Description of Embodiments

Embodiments of the invention will be described below. In the description of the drawings given below, the same or similar parts are denoted by the same or similar reference numerals. However, the drawings are illustrated schematically. Accordingly, specific dimensions and the like should be decided with reference to the following description. It will be appreciated that the relationship or the ratio between dimensions may be different among the drawings.

### (First embodiment)

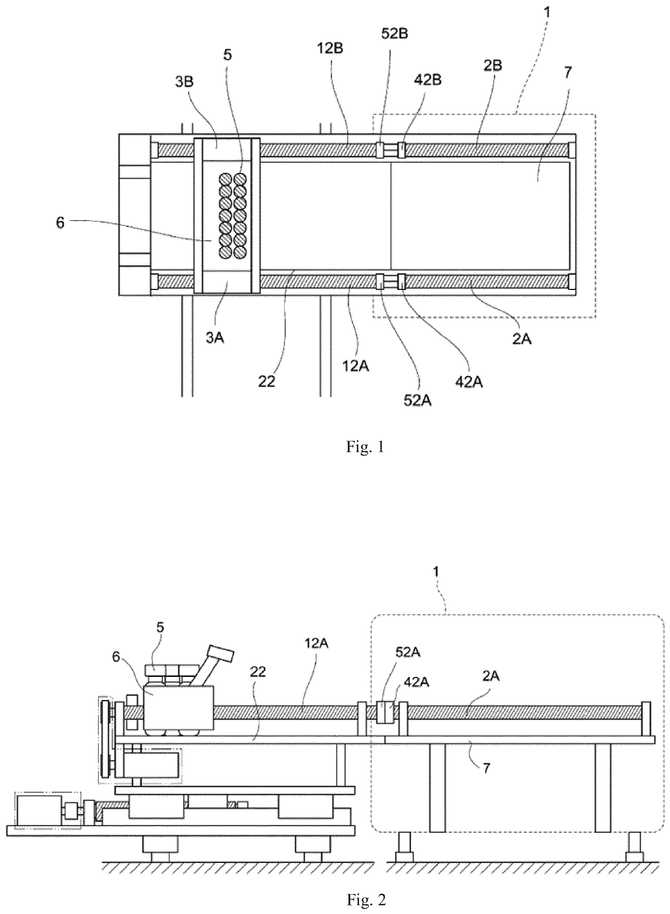

As illustrated in Fig. 1 and Fig. 2, a transfer apparatus according to a first embodiment of the invention includes first rod-shaped members 2A and 2B, including magnetic materials, that are provided with spiral patterns, first couplers 42A and 42B that are fixed to end portions of the first rod-shaped members 2A and 2B, second rod-shaped members 12A and 12B, including magnetic materials, that are provided with spiral patterns, and second couplers 52A and 52B, fixed to end portions of the second rod-shaped members 12A and 12B, that are coupled to the first couplers 42A and 42B so as to make relative angles between the spiral patterns of the first rod-shaped members 2A and 2B and the spiral patterns of the second rod-shaped members 12A and 12B constant.

The transfer apparatus further includes an opposite member 3A, opposed to parts of side surfaces of the first and second rod-shaped members 2A and 12A, that includes a magnetic material, an opposite member 3B, opposed to parts of side surfaces of the first and second rod-shaped members 2B and 12B, that includes a magnetic material, a driving device that rotates the first and second rod-shaped members 2A and 12A about central axes of the first and second rod-shaped members 2A and 12A, moves the opposite member 3A along the first and second rod-shaped members 2A and 12A, rotates the first and second rod-shaped members 2B and 12B about central axes of the first and second rod-shaped members 2B and 12B, and moves the opposite member 3B along the first and second rod-shaped members 2B and 12B, and a transfer member 6 that moves together with the opposite members 3A and 3B and transfers an article 5.

The first rod-shaped members 2A and 2B are disposed in, for example, a temperature-controlled furnace 1 in which the article 5 is disposed and that has a temperature-controlled space. The temperature-controlled furnace 1 is, for example, a freeze drying furnace. For example, a shelf board 7 is disposed in the temperature-controlled furnace 1 and the article 5 including an object to be freeze-dried is disposed on the shelf board 7. The article 5 is, for example, a vial into which a medicine has been poured.

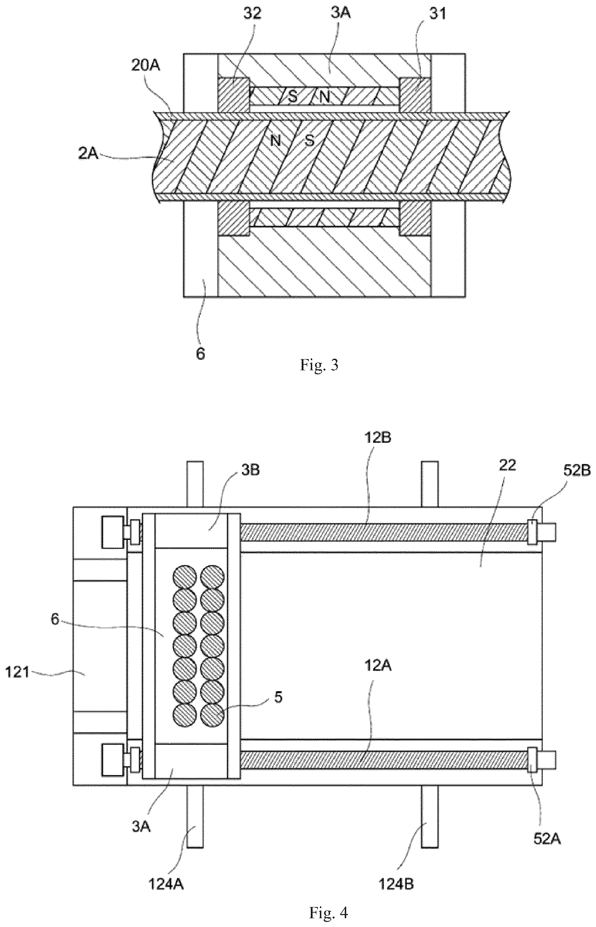

The cylindrical first rod-shaped member 2A is rotatably held in the temperature-controlled furnace 1 by a bearing. As illustrated in Fig. 3, the first rod-shaped member 2A is a magnetic screw including a hard magnetic material and a spiral pattern of S pole magnetized zones and a spiral pattern of N pole magnetized zones are alternately provided on an outer peripheral surface thereof. The first rod-shaped member 2A may be inserted into a thin-walled pipe 20A made of a nonmagnetic material. The pipe 20A is made of, for example, stainless steel. The first rod-shaped member 2A and the pipe 20A are integrated with each other and, when the first rod-shaped member 2A rotates, the pipe 20A also rotates about the central axis of the first rod-shaped member 2A.

The cylindrical first rod-shaped member 2B illustrated in Fig. 1 is also rotatably held in parallel with the first rod-shaped member 2A by a bearing in the temperature-controlled furnace 1. The structure of the first rod-shaped member 2B is the same as that of the first rod-shaped member 2A.

The cylindrical second rod-shaped members 12A and 12B are rotatably held by, for example, bearings or the like disposed on a table 22 illustrated in Fig. 2. The structures of the second rod-shaped members 12A and 12B are the same as that of the first rod-shaped member 2A illustrated in Fig. 3.

As illustrated in Fig. 1, the first coupler 42A is fixed to the end portion of the first rod-shaped member 2A and the second coupler 52A is fixed to the end portion of the second rod-shaped member 12A. The first coupler 42A and the second coupler 52A are coupled to or separated from each other. Accordingly, the first rod-shaped member 2A and the second rod-shaped member 12A can be separated from or coupled serially to each other via the first and second couplers 42A and 52A. The first and second rod-shaped members 2A and 12A coupled to each other are rotated synchronously by a rotating force applied to at least one of them.

In addition, the first coupler 42B is fixed to the end portion of the first rod-shaped member 2B and the second coupler 52B is fixed to the end portion of the second rod-shaped member 12B. The first coupler 42B and the second coupler 52B can be coupled to or separated from each other. Accordingly, the first rod-shaped member 2B and the second rod-shaped member 12B can be separated from or coupled serially to each other via the first and second couplers 42B and 52B. The first and second rod-shaped members 2B and 12B coupled to each other are rotated synchronously by a rotating force applied to at least one of them.

The opposite member 3A is a magnetic nut including a hard magnetic material and provided with a hole having an inner circumference larger than outer circumferences of the first and second rod-shaped members 2A and 12A. The first and second rod-shaped members 2A and 12A penetrate through the hole in the opposite member 3A having a nut shape. As illustrated in Fig. 3, a spiral pattern of S pole magnetized zones and a spiral pattern of N pole magnetized zones are alternately provided on an inner peripheral surface of the hole in the opposite member 3A. The pitch of the magnetized zones of the opposite member 3A is substantially the same as the pitch of the magnetized zones of the first and second rod-shaped members 2A and 12A.

Guide rings 31 and 32 such as bushes may be provided on an inner peripheral surface of the opposite member 3A. The inner circumferences of the guide rings 31 and 32 are smaller than the inner circumference of the opposite member 3A and make contact with the outer peripheral surface of the pipe 20A. Therefore, a constant interval is kept between the magnetized zones of the first and second rod-shaped members 2A and 12A and the magnetized zones of the opposite member 3A. The guide rings 31 and 32 are made of materials having a small friction coefficient, such as fluororesin.

The structure of the opposite member 3B illustrated in Fig. 1 is the same as that of the opposite member 3A. The first and second rod-shaped members 2B and 12B penetrate through a hole in the opposite member 3B having a nut shape.

The transfer member 6 is fixed between the opposite member 3A and the opposite member 3B. The article 5 to be moved between the table 22 and the temperature-controlled furnace 1 is disposed in the transfer member 6. Alternatively, the transfer member 6 may make contact with the article 5 and push the article 5 to be transferred.

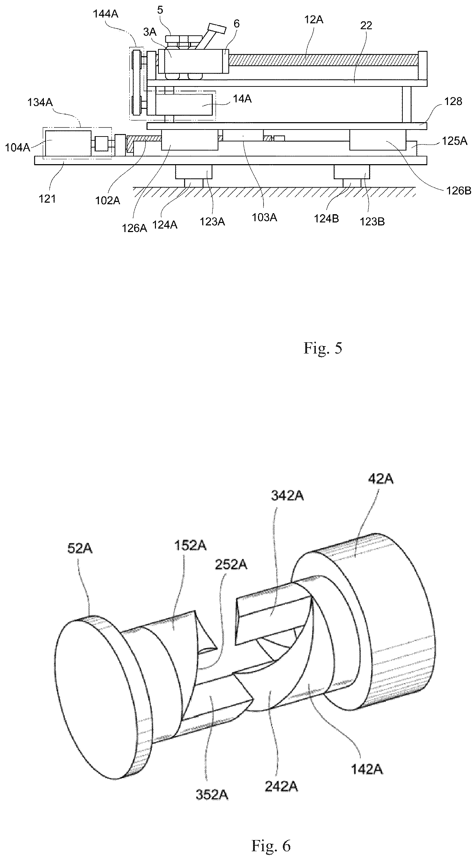

A driving device 14A illustrated in Fig. 5 includes, for example, a rotating motor. The driving device 14A is fixed to the table 22. In addition, the driving device 14A is connected to a controlling device. The driving device 14A may be covered with a shield or the like that prevents diffusion of dust that may be generated or the like. The driving device 14A and the second rod-shaped member 12A are connected to each other via, for example, a belt drive. The driving device 14A and the belt drive are covered with, for example, a shield 144A for prevention of dust. For example, a sealing member such as an oil seal is provided in a hole of the shield 144A through which a mandrel connecting a pulley of the belt drive and the second rod-shaped member 12A penetrates.

The driving device 14A rotates the second rod-shaped member 12A about the central axis and changes the relative position between the second rod-shaped member 12A and the opposite member 3A. In addition, a driving device (not illustrated) rotates the second rod-shaped member 12B illustrated in Fig. 1 and Fig. 4 about the central axis and changes the relative position between the second rod-shaped member 12B and the opposite member 3B.

When the first rod-shaped member 2A and the second rod-shaped member 12A are coupled to each other and the first rod-shaped member 2B and the second rod-shaped member 12B are connected to each other as illustrated in Fig. 1, the driving device 14A illustrated in Fig. 5 and the driving device that drives the second rod-shaped member 12B illustrated in Fig. 1 synchronously rotate the second rod-shaped members 12A and 12B. When the second rod-shaped members 12A and 12B are rotated, the first rod-shaped members 2A and 2B coupled thereto are also rotated.

When the driving device 14A illustrated in Fig. 5 rotates the first and second rod-shaped members 2A and 12A illustrated in Fig. 1, a magnetic force acts between the magnetized zones of the first or second rod-shaped member 2A or 12A and the magnetized zones of the opposite member 3A. The opposite member 3A is fixed to the transfer member 6 and the opposite member 3B and cannot rotate. Therefore, when the first and second rod-shaped members 2A and 12A rotate, the opposite member 3A moves along the central axes of the first and second rod-shaped members 2A and 12A.

In addition, when the driving device rotates the first and second rod-shaped members 2B and 12B, a magnetic force acts between the magnetized zones of the first or second rod-shaped member 2B or 12B and the magnetized zones of the opposite member 3B. The opposite member 3B is fixed to the transfer member 6 and the opposite member 3A and cannot rotate. Therefore, when the first and second rod-shaped members 2B and 12B rotate, the opposite member 3B moves along the central axes of the first and second rod-shaped members 2B and 12B.

With the movement of the opposite members 3A and 3B, the transfer member 6 fixed to the opposite members 3A and 3B also moves along the central axes of the first and second rod-shaped members 2A, 2B, 12A, and 12B and moves from the table 22 onto the shelf board 7 or from the shelf board 7 onto the table 22 depending on the rotational directions of the first and second rod-shaped members 2A, 2B, 12A, and 12B. This moves the article 5 from the table 22 onto the shelf board 7 or from the shelf board 7 onto the table 22.

As illustrated in Fig. 4 and Fig. 5, the transfer apparatus further includes a base member 121 positioned below the table 22, a table movement rod-shaped member 102A at least a pat of which is disposed on the base member 121 and that includes a magnetic material, a table movement opposite member 103A that is opposed to a part of a side surface of the table movement rod-shaped member 102A and includes a magnetic material, and a table driving device 104A that rotates the table movement rod-shaped member 102A about a central axis and changes the relative position between the table movement rod-shaped member 102A and the table movement opposite member 103A.

The table movement rod-shaped member 102A is held by, for example, a bearing or the like disposed on the base member 121. The table driving device 104A is fixed onto the base member 121 and covered with, for example, a shield 134A for prevention of dust. The table driving device 104A and the table movement rod-shaped member 102A are connected to each other via, for example, a mandrel. A hole of the shield 134A through which the mandrel penetrates is provided with a sealing member such as, for example, an oil seal.

On the base member 121, for example, a table movement rail 125A is disposed in parallel with the central axis of the table movement rod-shaped member 102A. In addition, a driver transmission member 128 is disposed on the base member 121 via guides 126A and 126B that are slidable along the table movement rail 125A. The drive transmission member 128 is fixed to the table movement opposite member 103A and the table 22.

When the table driving device 104A rotates the table movement rod-shaped member 102A, the table movement opposite member 103A moves along the central axis of the table movement rod-shaped member 102A by a magnetic force. With this, the drive transmission member 128 fixed to the table movement opposite member 103A moves along the central axis of the table movement rod-shaped member 102A. Furthermore, the table 22 fixed to the drive transmission member 128 moves along the central axis of the table movement rod-shaped member 102A.

On the base member 121, another set of a table driving device, a table movement rod-shaped member, and a table movement opposite member may be disposed in parallel with the table driving device 104A, the table movement rod-shaped member 102A, and the table movement opposite member 103A.

When the first couplers 42A and 42B and the second couplers 52A and 52B illustrated in Fig. 1 are coupled to each other, the table 22 is moved in the direction toward the temperature-controlled furnace 1 to bring the table 22 close to the temperature-controlled furnace 1. The table 22 and the temperature-controlled furnace 1 may be couplable to each other. This brings the second rod-shaped members 12A and 12B disposed on the table 22 close to the first rod-shaped members 2A and 2B disposed in the temperature-controlled furnace 1.

For example, when the door of the temperature-controlled furnace 1 is opened, the first couplers 42A and 42B and the second couplers 52A and 52B are coupled to each other. This enables the article 5 to move from the table 22 onto the shelf board 7 or from the shelf board 7 onto the table 22 when the temperature-controlled furnace 1 is opened.

When the first couplers 42A and 42B are separated from the second couplers 52A and 52B respectively, the table 22 is moved in the direction opposite to the temperature-controlled furnace 1 to move the table 22 away from the temperature-controlled furnace 1. This moves the second rod-shaped members 12A and 12B disposed on the table 22 away from the first rod-shaped members 2A and 2B disposed in the temperature-controlled furnace 1.

For example, after the article 5 is moved into the temperature-controlled furnace 1 or when the temperature-controlled furnace 1 is not used, the first couplers 42A and 42B are separated from the second couplers 52A and 52B, respectively. This enables the door of the temperature-controlled furnace 1 to be closed.

For example, wheels 123A and 123B illustrated in Fig. 5 may be provided on a bottom surface side of the base member 121. The wheels 123A and 123B may rotate on floor rails 124A and 124B, respectively, that extend in an orthogonal direction with respect to the central axis of the table movement rod-shaped member 102A. The table 22 can be moved in the orthogonal direction with respect to the central axis of the table movement rod-shaped member 102A via the wheels 123A and 123B.

As illustrated in Fig. 6, the first and second couplers 42A and 52A have, for example, spiral structures 142A and 152A that engage with each other. The spiral structures 142A and 152A are wound around the central axes of the first and second rod-shaped members 2A and 12A.

The spiral structure 142A of the first coupler 42A has a spiral curved surface 242A. The spiral curved surface 242A has, for example, a spiral shape formed along the cylindrical surface and the spiral structure 142A may have, for example, one set of spiral curved surfaces 242A that are 2-fold symmetric. Each of the one set of spiral curved surfaces 242A is wound by a half turn. The first coupler 42A further includes a flat surface 342A that is parallel with the central axis of the first rod-shaped member 2A. The flat surface 342A is orthogonal to the rotational direction of the first coupler 42A. For example, the end portion of the spiral curved surface 242A makes contact with the flat surface 342A.

The spiral structure 152A of the second coupler 52A has a spiral curved surface 252A. The spiral curved surface 252A has, for example, a spiral shape formed along the cylindrical surface and the spiral structure 152A may have, for example, one set of spiral curved surfaces 252A that are 2-fold symmetric. Each of the one set of spiral curved surfaces 252A is wound by a half turn. The second coupler 52A further includes a flat surface 352A that is parallel with the central axis of the second rod-shaped member 12A. The flat surface 352A is orthogonal to the rotational direction of the second coupler 52A. For example, the end portion of the spiral curved surface 252A makes contact with the flat surface 352A.

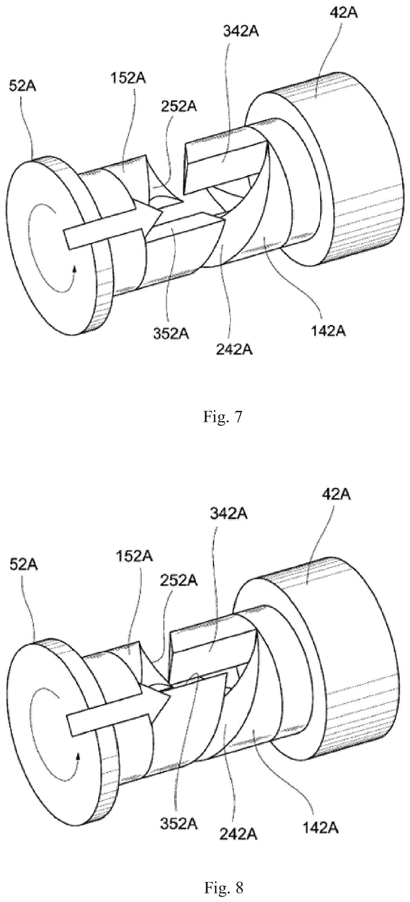

When the first coupler 42A and the second coupler 52A are coupled to each other, as illustrated in Fig. 7 to Fig. 10, for example, the second coupler 52A is brought close to the first coupler 42A by moving the second coupler 52A in the direction of the central axis of the second rod-shaped member 12A while rotating the second coupler 52A. The second coupler 52A is rotated in a direction in which the flat surface 352A of the second coupler 52A comes close to the flat surface 342A of the first coupler 42A.

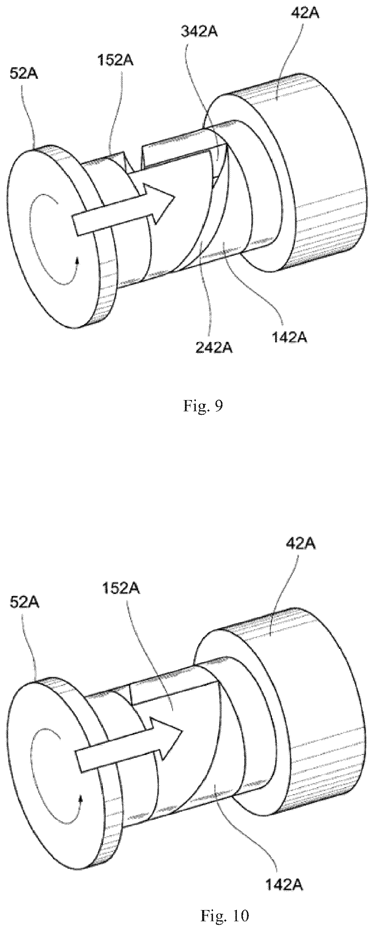

The approach speed and the rotational speed of the second coupler 52A are controlled so that the angle formed by the flat surface orthogonal to the central axis of the second coupler 52A and the spiral line drawn by the track of the end portion of the spiral curved surface 252A when the second coupler 52A comes close while rotating is smaller than the angle formed by the flat surface orthogonal to the central axis of the first coupler 42A and the spiral line of the spiral curved surface 242A. As illustrated in Fig. 8 and Fig. 9, when the flat surface 352A of the second coupler 52A makes contact with the flat surface 342A of the first coupler 42A by inserting the end portion of the spiral structure 152A of the second coupler 52A into a deep portion of the spiral structure 142A of the first coupler 42A so that the end portion of the spiral curved surface 252A of the second coupler 52A does not collide with the spiral curved surface 242A of the first coupler 42A, the second coupler 52A and the first coupler 42A rotate together with a predetermined relative angle kept. When the second coupler 52A is further brought close to the first coupler 42A, the spiral curved surface 252A of the second coupler 52A makes contact with the spiral curved surface 242A of the first coupler 42A, the spiral structure 142A engages with the spiral structure 152A, and the second coupler 52A and the first coupler 42A are coupled to each other as illustrated in Fig. 10.

After the coupling, by rotating the second rod-shaped member 12A without moving the second rod-shaped member 12A in the direction of the central axis of the second rod-shaped member 12A, a rotating force or a torque is transmitted to the first rod-shaped member 2A fixed to the first coupler 42A coupled to the second coupler 52A.

Since the first and second couplers 42A and 52A have the engagement structures described above, the relative angle becomes a predetermined angle when they are coupled to each other. In addition, the relative angle between the first and second couplers 42A and 52A when they are coupled to each other and the total length of the first and second couplers 42A and 52A in the direction of the central axis when they are coupled to each other are set so that the phase of the spiral pattern of the first rod-shaped member 2A coincides with the phase of the spiral pattern of the second rod-shaped member 12A and the spiral pattern of the second rod-shaped member 12A is present on an extension of the spiral pattern of the first rod-shaped member 2A.

Therefore, when the first and second couplers 42A and 52A are coupled to each other, the opposite member 3A can move smoothly from the first rod-shaped member 2A to the second rod-shaped member 12A or from the second rod-shaped member 12A to the first rod-shaped member 2A by straddling the first and second couplers 42A and 52A. This is true of other embodiments that will be described later.

When the first coupler 42A and the second coupler 52A are separated from each other, the second coupler 52A is moved away from the first coupler 42A without rotating the second coupler 52A. Alternatively, the second coupler 52A is moved away from the first coupler 42A while rotating the second coupler 52A in a direction in which the flat surface 352A of the second coupler 52A is separated from the flat surface 342A of the first coupler 42A.

The first and second couplers 42B and 52B illustrated in Fig. 1 are also coupled to or separated from each other as in the first and second couplers 42A and 52A.

In the transfer apparatus according to the first embodiment described above, a driving force is transmitted between the first and second rod-shaped members 2A and 12A and the opposite member 3A and between the first and second rod-shaped members 2B and 12B and the opposite member 3B in a non-contact manner by a magnetic force. Accordingly, when a driving force is transmitted between the rod-shaped members and the opposite member, heat and dust are unlikely to be generated. Therefore, even when the first rod-shaped members 2A and 2B and the opposite members 3A and 3B are disposed in the temperature-controlled space of the temperature-controlled furnace 1, an influence of heat generation in the temperature-controlled space can be suppressed and the temperature-controlled space can be kept clean.

In addition, the first rod-shaped members 2A and 2B are rotated via the second rod-shaped members 12A and 12B and the driving device that drives the second rod-shaped members 12A and 12B is disposed outside the temperature-controlled space of the temperature-controlled furnace 1. Therefore, even if dust is generated in the driving device, the dust is unlikely to enter the temperature-controlled space of the temperature-controlled furnace 1. In addition, if the driving device is disposed inside the temperature-controlled furnace, a temperature distribution may become uneven inside the temperature-controlled furnace such as a freeze drying furnace due to the heated driving device. In this case, the quality of a plurality of articles disposed in the temperature-controlled furnace may become uneven. In contrast, in the transfer apparatus according to the first embodiment, since the driving device is disposed outside the temperature-controlled space of the temperature-controlled furnace 1, temperature unevenness is unlikely to occur inside the temperature-controlled furnace 1.

Furthermore, in the transfer apparatus according to the first embodiment, it is possible to separate the first and second couplers 42A and 52A and the first and second couplers 42B and 52B from each other after transferring the article 5 into the temperature-controlled furnace 1. Therefore, the temperature-controlled space of the temperature-controlled furnace 1 can be hermetically sealed. Accordingly, the transfer apparatus according to the first embodiment can keep the inside of the temperature-controlled furnace 1 clean and suppress the temperature unevenness in the temperature-controlled furnace 1.

### (Second embodiment)

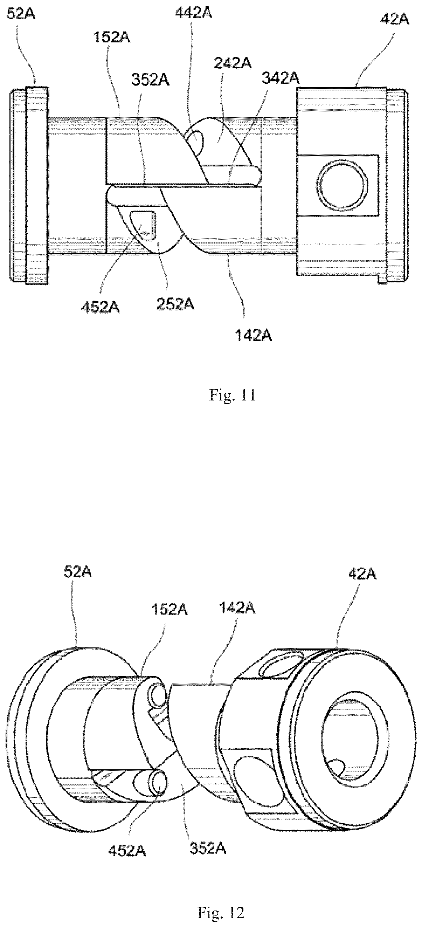

In a transfer apparatus according to a second embodiment, as illustrated in Fig. 11 to Fig. 13, a projection portion 452A such as a pin is provided on the spiral curved surface 252A of the second coupler 52A. The projection portion 452A is provided in parallel with the direction of the central axis of the second rod-shaped member 12A. In addition, a concave portion 442A such as a pin hole is provided in the spiral curved surface 242A of the first coupler 42A. The concave portion 442A is provided in parallel with the direction of the central axis of the first rod-shaped member 2A. The concave portion 442A provided in the first coupler 42A and the projection portion 452A provided in the second coupler 52A have shapes that can engage with each other and the projection portion 452A provided in the second coupler 52A is inserted into the concave portion 442A provided in the first coupler 42A.

The other components of the transfer apparatus according to the second embodiment are the same as those of the first embodiment.

When the first coupler 42A and the second coupler 52A are coupled to each other, for example, the second coupler 52A is brought close to the first coupler 42A by moving the second coupler 52A in the direction of the central axis of the second rod-shaped member 12A while rotating the second coupler 52A.

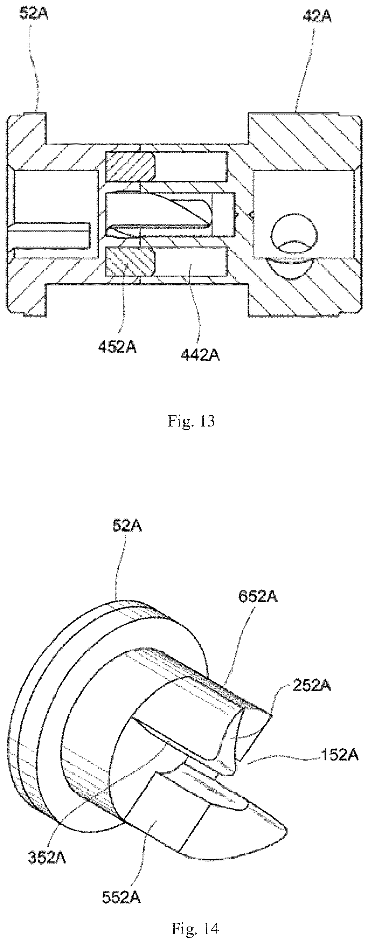

As in the first embodiment, when the flat surface 352A of the second coupler 52A makes contact with the flat surface 342A of the first coupler 42A while controlling the approach speed and the rotational speed of the second coupler 52A so that the end portion of the spiral curved surface 252A of the second coupler 52A does not collide with the spiral curved surface 242A of the first coupler 42A, the second coupler 52A and the first coupler 42A rotate together with a predetermined relative angle kept. When the second coupler 52A further comes close to the first coupler 42A, then the projection portion 452A provided in the second coupler 52A is inserted into the concave portion 442A provided in the first coupler 42A, the spiral curved surface 252A of the second coupler 52A makes contact with the spiral curved surface 242A of the first coupler 42A, and the second coupler 52A and the first coupler 42A are coupled to each other as illustrated in Fig. 13.

After the coupling, by rotating the second rod-shaped member 12A without moving the second rod-shaped member 12A in the direction of the central axis of the second rod-shaped member 12A, a rotating force or a torque is transmitted to the first rod-shaped member 2A fixed to the first coupler 42A.

For example, when the second rod-shaped member 12A is rotated in an outside direction with respect to the flat surface 352A of the second coupler 52A, the flat surface 352A of the second coupler 52A applies a rotating force or a torque to the flat surface 342A of the first coupler 42A and the first rod-shaped member 2A rotates in synchronization with the second rod-shaped member 12A.

Alternatively, when the second rod-shaped member 12A is rotated in an inside direction with respect to the flat surface 352A of the second coupler 52A, the outer wall of the projection portion 452A of the second coupler 52A applies a rotating force or a torque to the inner wall of the concave portion 442A of the second coupler 52A and the first rod-shaped member 2A rotates in synchronization with the second rod-shaped member 12A.

When the first coupler 42A and the second coupler 52A are separated from each other, the second coupler 52A is moved in a direction opposite to the first coupler 42A without being rotated. When the spiral curved surface 242A of the first coupler 42A is provided with a concave portion and the spiral curved surface 252A of the second coupler 52A is provided with a projection portion, if the number of turns of the spiral structure 142A and the number of turns of the spiral structure 152A are one or less, the first coupler 42A and the second coupler 52A are easily separated from each other.

When the projection portion 452A and the concave portion 442A in parallel with the first and second rod-shaped members 2A and 12A are absent, if the second rod-shaped member 12A is rotated in an inside direction with respect to the flat surface 352A of the second coupler 52A, a rotating force or a torque is transmitted from the spiral curved surface 252A of the second coupler 52A to the spiral curved surface 242A of the first coupler 42A. At this time, a reactive force that depends on the inclined angles of the spiral curved surfaces 242A and 252A may be generated in the directions of the central axes of the first and second rod-shaped members 2A and 12A. Therefore, when the reactive force in the directions of the central axes are large, a gap may be generated between the first and second couplers 42A and 52A.

When a gap is generated between the first and second couplers 42A and 52A, the rotating force or the torque of the second rod-shaped member 12A may not be transmitted sufficiently to the first rod-shaped member 2A. In addition, when a gap is generated between the first and second couplers 42A and 52A, the spiral pattern of the first rod-shaped member 2A is not present on an extension of the spiral pattern of the second rod-shaped member 12A and the movement position of the transfer member 6 may not be controlled accurately.

In contrast, since a rotating force or a torque is transmitted via the projection portion 452A and the concave portion 442A provided in parallel with the central axes of the first and second rod-shaped members 2A and 12A regardless of the rotational direction of the second rod-shaped member 12A in the transfer apparatus according to the second embodiment, the generation of a reactive force in the directions of the central axes can be suppressed.

It should be noted here that the spiral curved surface 242A of the first coupler 42A may be provided with the projection portion and the spiral curved surface 252A of the second coupler 52A may be provided with the concave portion.

### (Third embodiment)

In a transfer apparatus according to a third embodiment, as illustrated in Fig. 14, the second coupler 52A includes the first flat surface 352A that is parallel with directions of the central axes of the first and second rod-shaped members 2A and 12A and oriented to the first rotational direction of the first and second rod-shaped members 2A and 12A and a second flat surface 552A that is oriented to the second rotational direction opposite to the first rotational direction. For example, in the end portion of the second coupler 52A, the spiral structure 152A projects from a base portion 652A having the first and second flat surfaces 352A and 552A.

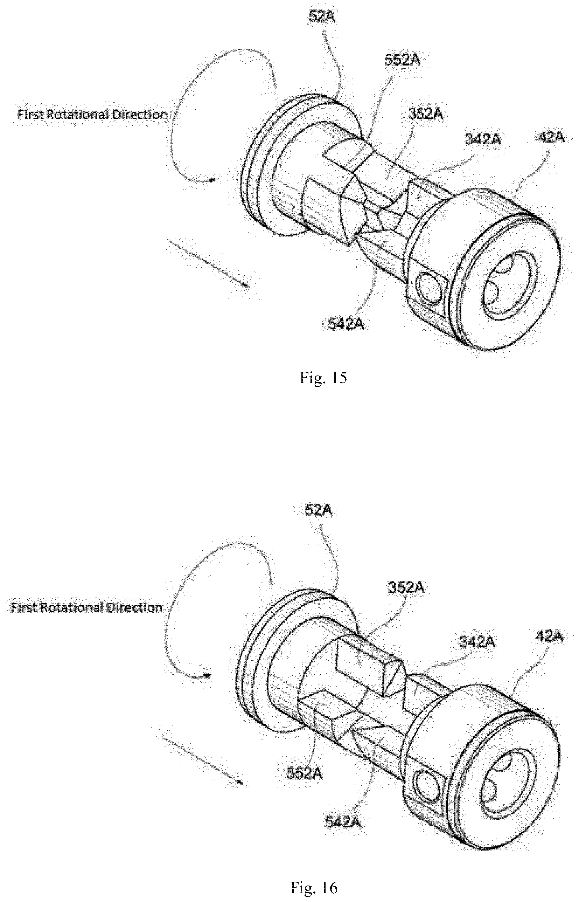

As illustrated in Fig. 15, the first coupler 42A has a structure similar to that of the second coupler 52A, includes the first flat surface 342A oriented in the first rotational direction of the first and second rod-shaped members 2A and 12A and a second flat surface 542A oriented in the second rotational direction opposite to the first rotational direction, and engages with the second coupler 52A.

The other components of the transfer apparatus according to the third embodiment are the same as those of the first embodiment.

When the first coupler 42A and the second coupler 52A are coupled to each other, for example, the second coupler 52A is brought close to the first coupler 42A by moving the second coupler 52A in the direction of the central axis of the second rod-shaped member 12A while rotating the second coupler 52A, as illustrated in Fig. 15 to Fig. 19.

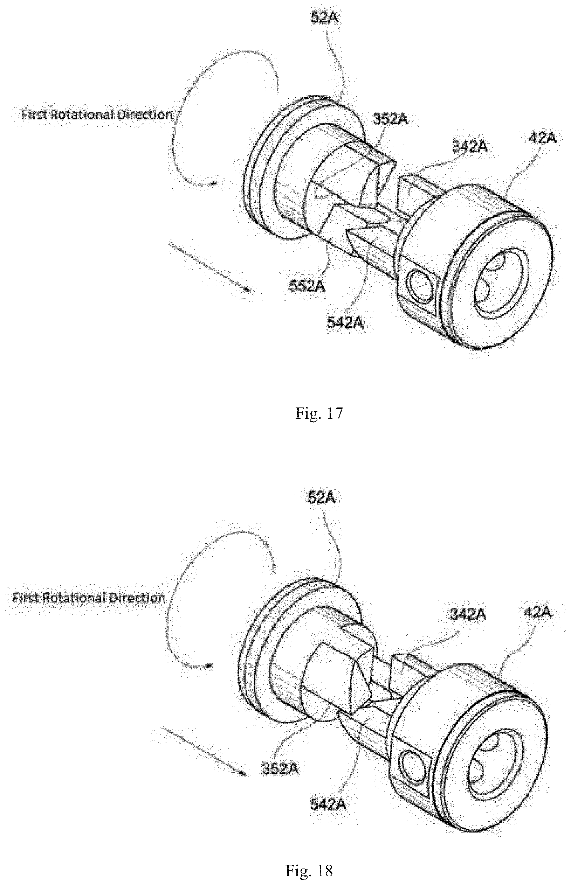

When the second coupler 52A makes contact with the first coupler 42A at any relative angle and the second coupler 52A is brought close to the first coupler 42A while rotating the second coupler 52A as illustrated in Fig. 15 and Fig. 16, the end portion of the spiral structure 152A of the second coupler 52A is inserted into the concave portion of the spiral structure 142A of the first coupler 42A as illustrated in Fig. 17 and Fig. 18.

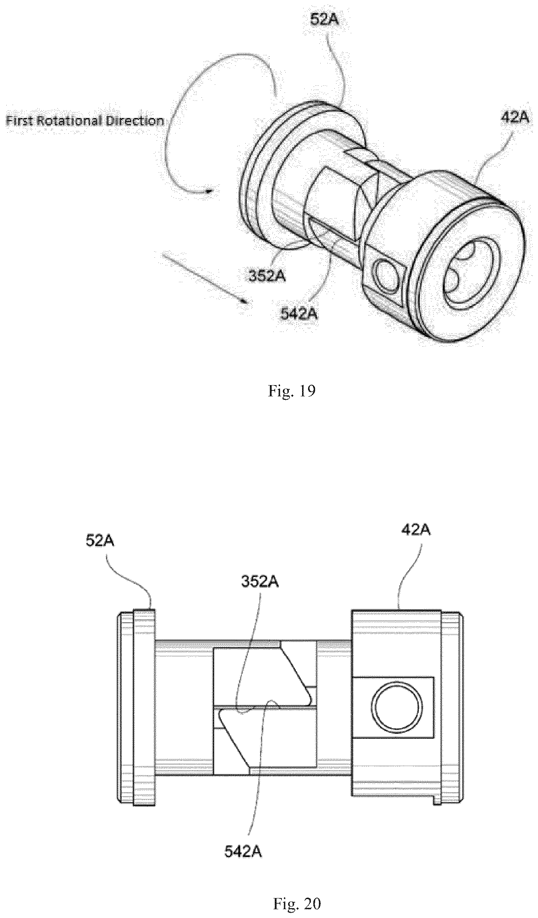

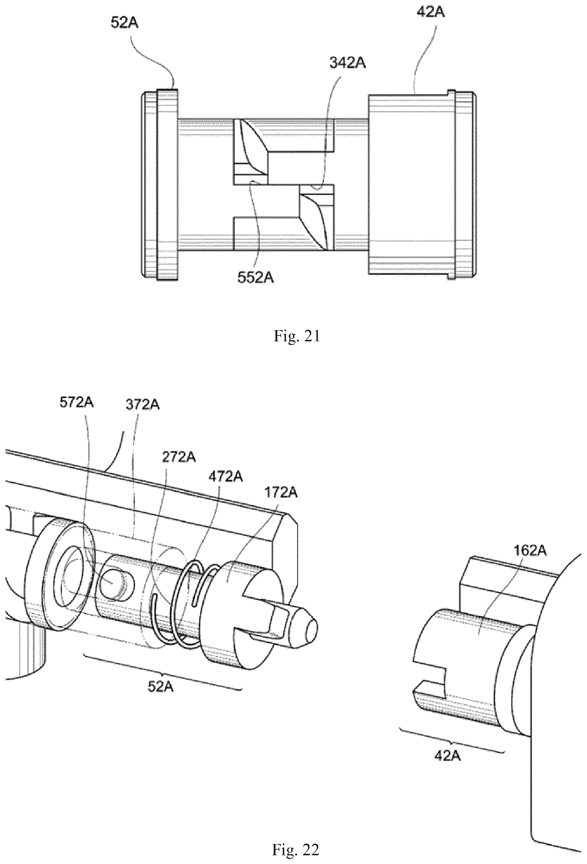

Furthermore, the first flat surface 352A of the second coupler 52A makes contact with the second flat surface 542A of the first coupler 42A as illustrated in Fig. 19 and Fig. 20, the second flat surface 552A of the second coupler 52A makes contact with the first flat surface 342A of the first coupler 42A as illustrated in Fig. 21, and the second coupler 52A and the first coupler 42A are coupled to each other.

After the coupling, by rotating the second rod-shaped member 12A without moving the second rod-shaped member 12A in the direction of the central axis of the second rod-shaped member 12A, a rotating force or a torque is transmitted to the first rod-shaped member 2A fixed to the first coupler 42A.

Specifically, when the second rod-shaped member 12A is rotated in the first rotational direction, a rotating force or a torque is transmitted from the first flat surface 352A of the second coupler 52A illustrated in Fig. 20 to the second flat surface 542A of the first coupler 42A. In addition, when the second rod-shaped member 12A is rotated in the second rotational direction, a rotating force or a torque is transmitted from the second flat surface 552A of the second coupler 52A illustrated in Fig. 21 to the first flat surface 342A of the first coupler 42A.

When the first coupler 42A and the second coupler 52A are separated from each other, the second coupler 52A is moved in a direction opposite to the first coupler 42A without rotating the second coupler 52A.

In the transfer apparatus according to the third embodiment, since a rotating force or a torque is transmitted to the first coupler 42A via one of the first and second flat surfaces 352A and 552A of the second coupler 52A regardless of the rotational direction of the second rod-shaped member 12A, the generation of a reactive force in the direction of the central axis can be suppressed.

### (Fourth embodiment)

In a transfer apparatus according to a fourth embodiment, the first and second couplers 42A and 52A have engagement structures 162A and 172A that engage with each other, as illustrated in Fig. 22. In the fourth embodiment, the engagement structures 162A and 172A may be spiral structures or may not be spiral structures. For example, the engagement structure 162A has a concave portion with inner walls facing each other. In addition, the engagement structure 172A has a projection portion to be inserted into the concave portion of the engagement structure 162A. However, the engagement structures 162A and 172A may have any shapes as long as the relative angle becomes a predetermined angle when the first and second couplers 42A and 52A engage with each other.

The second coupler 52A has, for example, a cylindrical member 372A that has a central axis aligned with the direction of the central axis of the second rod-shaped member 12A and a mandrel member 472A, inserted into a hollow portion of the cylindrical member 372A, that is movable in the direction of the central axis of the second rod-shaped member 12A. The mandrel member 472A may be provided with a guide 572A that prevents the rotation of the mandrel member 472A in the cylindrical member 372A and restricts the movement range in the direction of the central axis. The engagement structure 172A is fixed to the end portion of the mandrel member 472A.

The second coupler 52A further includes an elastic member 272A with which the first and second couplers 42A and 52A make contact and that contracts when the first and second couplers 42A and 52A do not engage with each other. The elastic member 272A is, for example, a coil spring wound around the mandrel member 472A and disposed between the cylindrical member 372A and the engagement structure 172A.

The other components of the transfer apparatus according to the fourth embodiment are the same as those of the first embodiment.

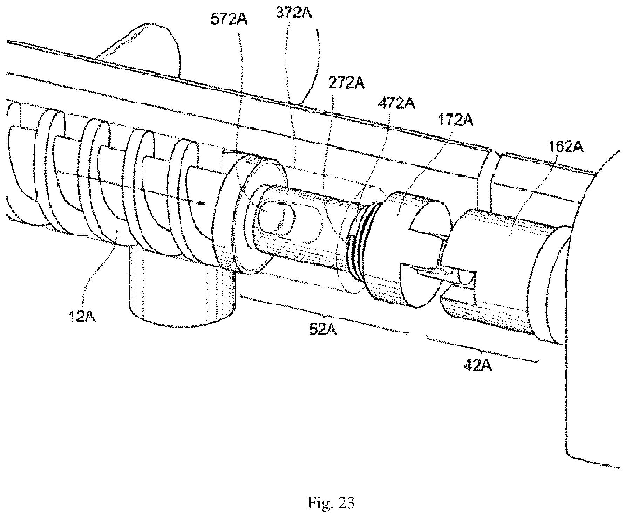

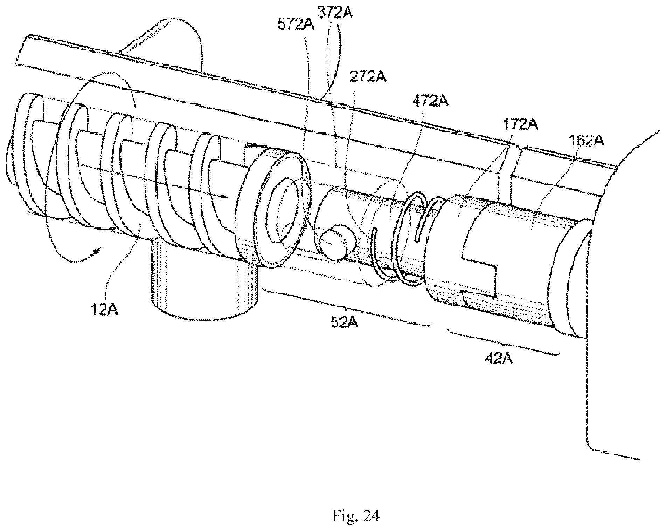

When the first coupler 42A and the second coupler 52A are coupled to each other, for example, the second coupler 52A is brought close to the first coupler 42A by moving the second coupler 52A in the direction of the central axis of the second rod-shaped member 12A, as illustrated in Fig. 23 and Fig. 24. At this time, the second coupler 52A may be brought close to the first coupler 42A while rotating the second coupler 52A or the second coupler 52A may be brought close to the first coupler 42A without rotating the second coupler 52A.

When the second coupler 52A makes contact with the first coupler 42A at any relative angle and the engagement structures 162A and 172A do not engage with each other, if the second coupler 52A is further brought close to the first coupler 42A, the engagement structures 162A and 172A do not still engage with each other and the elastic member 272A contracts as illustrated in Fig. 23.

When the second coupler 52A is rotated at this time, if the relative angle at which the engagement structures 162A and 172A engage with each other is reached, the force stored in the elastic member 272A is released and the engagement structure 172A is pushed into the engagement structure 162A. This couples the first coupler 42A and the second coupler 52A to each other.

In the transfer apparatus according to the fourth embodiment described above, the first and second couplers 42A and 52A can be coupled to each other without applying an excess force to the first rod-shaped member 2A in the direction of the central axis.

Although the example in which the second coupler 52A has the elastic member 272A is described above, the first coupler may have the elastic member.

### (Fifth embodiment)

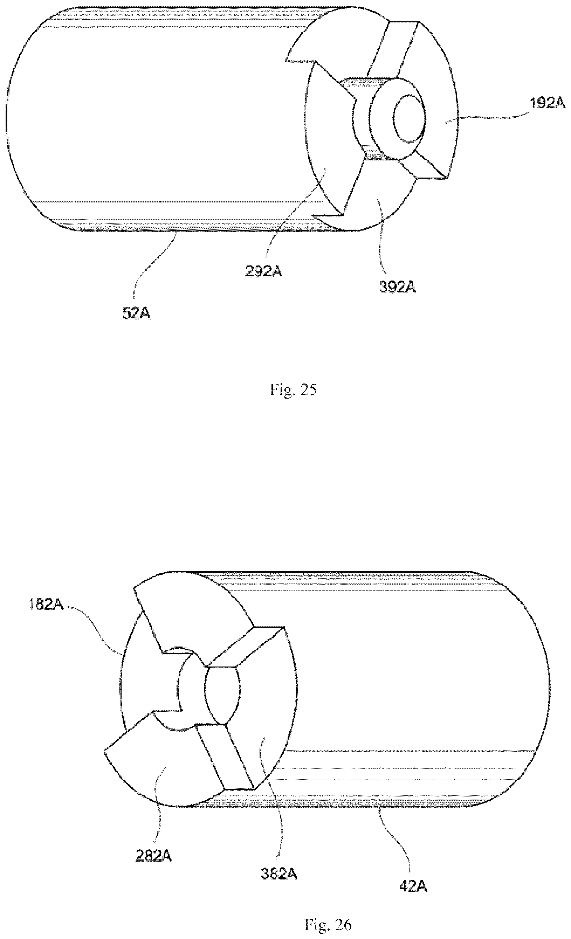

In a transfer apparatus according to a fifth embodiment, the first and second couplers 42A and 52A have engagement structures 182A and 192A that engage with each other, as illustrated in Fig. 25 and Fig. 26. In the fifth embodiment, the engagement structures 182A and 192A may be spiral structures or may not be spiral structures. The engagement structures 182A and 192A may have any shapes as long as the relative angle becomes a predetermined angle when the first and second couplers 42A and 52A engage with each other. The engagement structures 182A and 192A change the relative angle between the first and second couplers 42A and 52A using at least one of an attraction force between different magnetic poles and a repulsion force between identical magnetic poles.

For example, as illustrated in Fig. 26, the engagement structure 182A of the first coupler 42A has a convex surface 282A with the first magnetic pole and a concave surface 382A with the second magnetic pole, which is a pole different from the first magnetic pole. In addition, as illustrated in Fig. 25, the engagement structure 192A of the second coupler 52A has a convex surface 292A with the first magnetic pole and a concave surface 392A with the second magnetic pole. When the first magnetic pole is a north pole, the second magnetic pole is a south pole. In contrast, when the first magnetic pole is a south pole, the second magnetic pole is a north pole.

The other components of the transfer apparatus according to the fifth embodiment are the same as those of the first embodiment.

When the first coupler 42A and the second coupler 52A are coupled to each other, the second coupler 52A is brought close to the first coupler 42A by, for example, moving the second coupler 52A in the direction of the central axis of the second rod-shaped member 12A. At this time, the second coupler 52A may be brought close to the first coupler 42A while rotating the second coupler 52A or the second coupler 52A may be brought close to the first coupler 42A without rotating the second coupler 52A.

Even when the second coupler 52A makes contact with the first coupler 42A at any relative angle and the engagement structures 192A and 182A do not engage with each other at that time, the convex surface 282A of the first coupler 42A that has the first magnetic pole and the concave surface 392A of the second coupler 52A that has the second magnetic pole attract each other and the concave surface 382A of the first coupler 42A that has the second magnetic pole and the convex surface 292A of the second coupler 52A that has the first magnetic pole attract each other. Alternatively, the convex surface 282 of the first coupler 42A that has the first magnetic pole and the convex surface 292A of the second coupler 52A that has the first magnetic pole repel each other and the concave surface 382A of the first coupler 42A that has the second magnetic pole and the concave surface 392A of the second coupler 52A that has the second magnetic pole repel each other.

Therefore, the engagement structures 182A and 192A can engage with each other so that one of the first and second couplers 42A and 52A is rotated by an attraction force between different magnetic poles and a repulsion force between identical magnetic poles, the convex surface 282A of the first coupler 42A that has the first magnetic pole makes contact with the concave surface 392A of the second coupler 52A that has the second magnetic pole, and the concave surface 382A of the first coupler 42A that has the second magnetic pole makes contact with the convex surface 292A of the second coupler 52A that has the first magnetic pole.

### (First modification of embodiment)

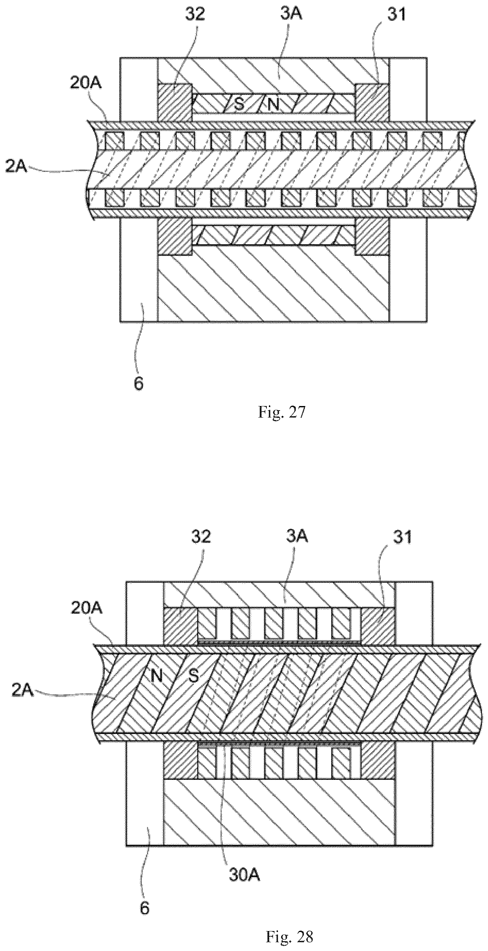

The structures of the rod-shaped member 2A and the opposite member 3A are not limited to the example illustrated in Fig. 3. For example, as illustrated in Fig. 27, the first rod-shaped member 2A may be formed of a soft magnetic material having a spiral pattern of threads. The structure of the opposite member 3A is the same as that in Fig. 3. The pitch of the threads of the first rod-shaped member 2A illustrated in Fig. 27 is substantially the same as the pitch of the magnetized zones of the opposite member 3A. The first rod-shaped member 2A having a spiral pattern of threads may be inserted into the thin-walled pipe 20A made of a nonmagnetic material. This can prevent foreign matters from adhering to the threaded groove of the first rod-shaped member 2A. When the first rod-shaped member 2A rotates, a magnetic force acts between the threads of the first rod-shaped member 2A and the magnetized zones of the opposite member 3A and the opposite member 3A moves.

Alternatively, as illustrated in Fig. 28, the opposite member 3A may be formed of a soft magnetic material having a spiral pattern of threads. The surface of a threaded hole in the opposite member 3A may be covered with a thin-walled pipe 30A made of a nonmagnetic material. This can prevent foreign matters from adhering to the threaded groove of the opposite member 3A. The structure of the first rod-shaped member 2A is the same as that in Fig. 3. The pitch of the threads of the opposite member 3A illustrated in Fig. 28 is substantially the same as the pitch of the magnetized zones of the first rod-shaped member 2A. When the first rod-shaped member 2A rotates, a magnetic force acts between the magnetized zones of the first rod-shaped member 2A and the threads of the opposite member 3A and the opposite member 3A moves.

The first rod-shaped member 2B, the second rod-shaped members 12A and 12B, and the opposite member 3B illustrated in Fig. 1 may also have structures as illustrated in Fig. 27 or Fig. 28.

### (Second modification of embodiment)

When the first and second rod-shaped members 2A and 12A and the opposite member 3A include hard magnetic materials and the number of poles in a combination of the first or second rod-shaped member 2A or 12A and the opposite member 3A is 2n (where n is a natural number) in Fig. 1, the first and second couplers 42A and 52A may be configured to be couplable to each other every relative rotation by 360 × m/n degrees (where m is a natural number). This is true of the first and second couplers 42B and 52B.

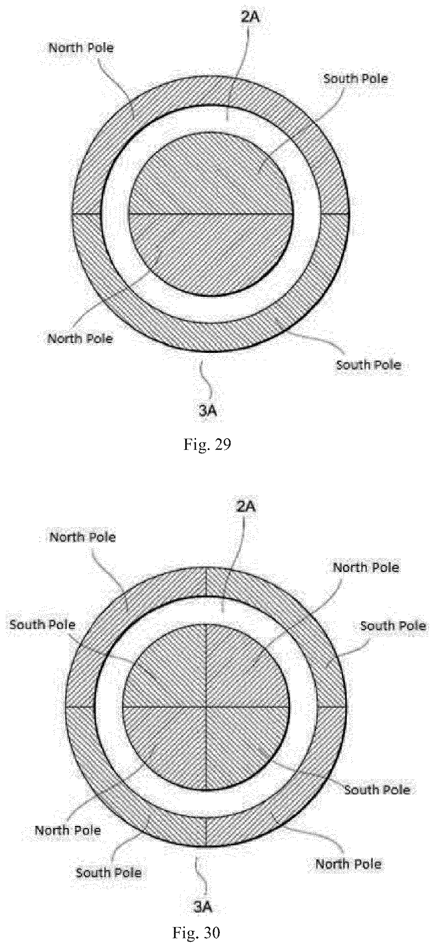

Here, the number of poles represents the number of combinations of a north pole and a south pole. For example, when as illustrated in Fig. 29, one combination of a north pole and a south pole is present in each of the first rod-shaped member 2A and the opposite member 3A, the number of magnetic poles is 2(= 2 × 1). In this case, the first and second couplers 42A and 52A are configured to be couplable to each other every relative rotation by 360 × m degrees.

When two combinations of a north pole and a south pole are present in each of the first rod-shaped member 2A and the opposite member 3A as illustrated in Fig. 30, the number of magnetic poles is 4 (= 2 × 2). In this case, the first and second couplers 42A and 52A are configured to be couplable to each other every relative rotation by 180 × m degrees.

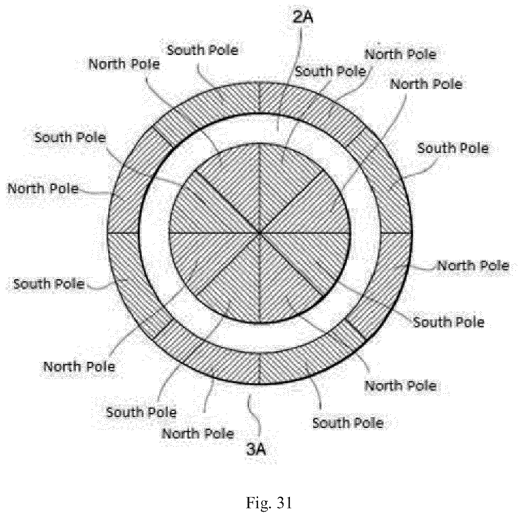

When four combinations of a north pole and a south pole are present in each of the first rod-shaped member 2A and the opposite member 3A as illustrated in Fig. 31, the number of magnetic poles is 8 (= 2 × 4). In this case, the first and second couplers 42A and 52A are configured to be couplable to each other every relative rotation by 90 × m degrees.

Alternatively, when one of the first and second rod-shaped members 2A and 12A and the opposite member 3A may include a hard magnetic material, the other may include a soft magnetic material, and the number of poles in a combination of the first or second rod-shaped member 2A or 12A and the opposite member 3A is 2n (where n represents a natural number), the first and second couplers 42A and 52A may be configured to be couplable to each other every relative rotation by 180 × m/n degrees.

### (Other embodiments)

Although the invention has been described by embodiments as described above, it should not be understood that the description and the drawings that are parts of the disclosure limit the invention. It must be apparent to those skilled in the art that various alternative embodiments, examples, and operational techniques are clarified based on the disclosure. For example, the articles transferred to or from the furnace are not limited to the inclusion of medicines, but may include foods, beverages, precision parts, etc., as well as any articles to be transferred to or from the furnace. In addition, the furnace in which the first rod-shaped members 2A and 2B are disposed is not limited to a temperature-controlled furnace, but includes any furnaces such as a fermentation furnace, a cleaning furnace having a cleanliness-controlled space, and a vacuum furnace having a vacuum-evacuated space. Furthermore, the shape of the opposite member is not limited to a nut shape, but may be, for example, a concave shape. In that case, the rod-shaped member passes through a concave portion of a concave opposite member. S pole magnetized zones and N pole magnetized zones are alternately provided on the side surface of the concave portion of the concave opposite member. As described above, it should be understood that the invention encompasses various embodiments and the like not described in the specification.

### Reference Signs List

1: temperature-controlled furnace
2A, 2B: first rod-shaped member
3A, 3B: opposite member
5: article
6: transfer member
7: shelf board
12A, 12B: second rod-shaped member
14A: driving device
20A, 30A: thin-walled pipe
22: table
31: guide ring
42A, 42B: first coupler
52A, 52B: second coupler
102A: table movement rod-shaped member
103A: table movement opposite member
104A: table driving device
121: base member
123A, 123B: wheel
124A, 124B: floor rail
125A: table movement rail
126A, 126B: guide
128: drive transmission member
134A, 144A: shield
142A, 152A: spiral structure
162A, 172A, 182A, 192A: engagement structure
242A, 252A: spiral curved surface
272A: elastic member
282A, 292A: convex surface
342A, 352A, 542A, 552A: flat surface
372A: cylindrical member
382A, 392A: concave surface
442A: concave portion
452A: projection portion
472A: mandrel member
572A: guide
652A: base portion

## Claims

1. A transfer apparatus comprising:
a first rod-shaped member (2A) that includes a magnetic material, the first rod-shaped member (2A) being provided with a spiral pattern;
a first coupler (42A) that is fixed to an end portion of the first rod-shaped member (2A);
a second rod-shaped member (12A) that includes a magnetic material, the second rod-shaped member being provided with a spiral pattern;
a second coupler (52A) that is fixed to an end portion of the second rod-shaped member (12A), the first rod-shaped member (2A) and the second rod-shaped member (12A) being configured to be separated from or coupled serially to each other via the first and second couplers (42A, 52A) during the operation of the transfer apparatus, wherein when the first and second couplers (42A, 52A) are coupled to each other, the opposite member (3A) can move smoothly from the first rod-shaped member (2A) to the second rod-shaped member (12A) or from the second rod-shaped member (12A) to the first rod-shaped member (2A), the second coupler (52A) being coupled to the first coupler (42A) so as to make a relative angle between the spiral pattern of the first rod-shaped member (2A) and the spiral pattern of the second rod-shaped member (12A) constant when coupled to each other; an opposite member (3A) that is opposed to parts of side surfaces of the first and second rod-shaped members (2A, 12A), the opposite member (3A) including a magnetic material; and
a driving device (14A) configured to drive the second rod-shaped member to rotate about its central axis , wherein when the second rod-shaped member (12A) is rotated, the first rod-shaped member (2A) is also rotated about its central axis in the coupled state, and to move the opposite member (3A) along the first and second rod-shaped members (2A, 12A), wherein a driving force is transmitted between the first and second rod-shaped members (2A, 12A) and the opposite member (3A) in a non-contact manner by a magnetic force.

2. The transfer apparatus according to claim 1,
wherein the first and second couplers (42A, 52A) are coupled to each other by bringing the first and second rod-shaped members close to each other while rotating at least one of the first and second rod-shaped members (2A, 12A).

3. The transfer apparatus according to claim 1 or 2,
wherein the first and second couplers (42A, 52A) have spiral structures (142A, 152A) that engage with each other.

4. The transfer apparatus according to claim 3,
wherein a spiral curved surface (252A) of the spiral structure (152A) of one of the first and second couplers (42A, 52A) is provided with a projection portion (452A) and a spiral curved surface (242A) of the spiral structure (142A) of the other of the first and second couplers (42A, 52A) is provided with a concave portion (442A) into which the projection portion (452A) is inserted.

5. The transfer apparatus according to claim 3 or 4,
wherein the first and second couplers (42A, 52A) have first flat surfaces (342A, 352A) that are parallel with directions of the central axes of the first and second rod-shaped members and oriented to a first rotational direction of the first and second rod-shaped members (2A, 12A) and second flat surfaces (542A, 552A) that are parallel with the directions of the central axes of the first and second rod-shaped members and oriented to a second rotational direction of the first and second rod-shaped members (2A, 12A).

6. The transfer apparatus according to claim 1 or 2,
wherein the first and second couplers (42A, 52A) have engagement structures (162A, 172A) that engage with each other and
at least one of the first and second couplers (42A, 52A) has an elastic member (272A) that contracts when the first and second couplers (42A, 52A) come into contact with each other and the first and second couplers (42A, 52A) do not engage with each other.

7. The transfer apparatus according to claim 1 or 2,
wherein the first and second couplers (42A, 52A) have engagement structures (182A, 192A) that engage with each other and
the engagement structures (182A, 192A) change a relative angle between the first and second couplers (42A, 52A) using at least one of an attraction force between different magnetic poles and a repulsion force between identical magnetic poles.

8. The transfer apparatus according to any one of claims 1, 2, and 7,
wherein each of the first and second couplers (42A, 52A) has a convex surface (282A, 292A) having a first magnetic pole and a concave surface (382A, 392A) having a second magnetic pole.

9. The transfer apparatus according to claim 1 or 2,
wherein the first and second rod-shaped members (2A, 12A) and the opposite member (3A) include hard magnetic materials and,
when the number of poles of each, the first or second rod-shaped member (2A, 12A) and the opposite member (3A) is 2n, where n represents a natural number, the first and second couplers (42A, 52A) are configured to be couplable to each other every relative rotation by 360 × m/n degrees, where m represents a natural number.

10. The transfer apparatus according to claim 1 or 2,
wherein one of the first and second rod-shaped members (2A, 12A) and the opposite member (3A) includes a hard magnetic material and the other includes a soft magnetic material and,
when the number of poles of each, the first or second rod-shaped member (2A, 12A) and the opposite member (3A) is 2n, where n represents a natural number, the first and second couplers (42A, 52A) are configured to be couplable to each other every relative rotation by 180 × m/n degrees, where m represents a natural number.

## Patentansprüche

1. Transfervorrichtung, umfassend:
ein erstes stabförmiges Element (2A), das ein magnetisches Material beinhaltet, wobei das erste stabförmige Element (2A) mit einem Spiralmuster versehen ist;
einen ersten Koppler (42A), der an einem Endabschnitt des ersten stabförmigen Elements (2A) befestigt ist;
ein zweites stabförmiges Element (12A), das ein magnetisches Material beinhaltet, wobei das zweite stabförmige Element mit einem Spiralmuster versehen ist;
einen zweiten Koppler (52A), der an einem Endabschnitt des zweiten stabförmigen Elements (12A) befestigt ist, wobei das erste stabförmige Element (2A) und das zweite stabförmige Element (12A) konfiguriert sind, um während des Betriebs der Transfervorrichtung über den ersten und den zweiten Koppler (42A, 52A) voneinander getrennt oder in Reihe miteinander gekoppelt zu sein, wobei, wenn der erste und der zweite Koppler (42A, 52A) miteinander gekoppelt sind, das gegenüberliegende Element (3A) sich reibungslos von dem ersten stabförmigen Element (2A) zu dem zweiten stabförmigen Element (12A) oder von dem zweiten stabförmigen Element (12A) zu dem ersten stabförmigen Element (2A) bewegen kann, wobei der zweite Koppler (52A) mit dem ersten Koppler (42A) gekoppelt ist, um einen relativen Winkel zwischen dem Spiralmuster des ersten stabförmigen Elements (2A) und dem Spiralmuster des zweiten stabförmigen Elements (12A) konstant zu machen, wenn diese miteinander gekoppelt sind; ein gegenüberliegendes Element (3A), das Teilen der Seitenflächen des ersten und des zweiten stabförmigen Elements (2A, 12A) gegenüberliegt, wobei das gegenüberliegende Element (3A) ein magnetisches Material beinhaltet; und
eine Antriebsvorrichtung (14A), die konfiguriert ist, um das zweite stabförmige Element anzusteuern, sodass es um seine Mittelachse dreht, wobei, wenn das zweite stabförmige Element (12A) gedreht wird, das erste stabförmige Element (2A) in dem gekoppelten Zustand auch um seine Mittelachse gedreht wird, und um das gegenüberliegende Element (3A) entlang des ersten und des zweiten stabförmigen Elements (2A, 12A) zu bewegen, wobei eine Antriebskraft zwischen dem ersten und dem zweiten stabförmigen Element (2A, 12A) und dem gegenüberliegenden Element (3A) berührungslos durch eine Magnetkraft übertragen wird.

2. Transfervorrichtung nach Anspruch 1,
wobei der erste und der zweite Koppler (42A, 52A) miteinander gekoppelt werden, indem das erste und das zweite stabförmige Element nahe zueinander gebracht werden, während mindestens eines von dem ersten und dem zweiten stabförmigen Element (2A, 12A) gedreht wird.

3. Transfervorrichtung nach Anspruch 1 oder 2,
wobei der erste und der zweite Koppler (42A, 52A) Spiralstrukturen (142A, 152A) aufweisen, die ineinander greifen.

4. Transfervorrichtung nach Anspruch 3,
wobei eine spiralförmig gekrümmte Oberfläche (252A) der Spiralstruktur (152A) von einem von dem ersten und dem zweiten Koppler (42A, 52A) mit einem Vorsprungabschnitt (452A) versehen ist und eine spiralförmig gekrümmte Oberfläche (242A) der Spiralstruktur (142A) des anderen von dem ersten und dem zweiten Koppler (42A, 52A) mit einem konkaven Teil (442A) versehen ist, in den der Vorsprungabschnitt (452A) eingesetzt ist.

5. Transfervorrichtung nach Anspruch 3 oder 4,
wobei der erste und der zweite Koppler (42A, 52A) erste flache Oberflächen (342A, 352A), die parallel zu den Richtungen der zentralen Achsen des ersten und des zweiten stabförmigen Elements sind und zu einer ersten Drehrichtung des ersten und des zweiten stabförmigen Elements (2A, 12A) ausgerichtet sind, und zweite flache Oberflächen (542A, 552A), die parallel zu den Richtungen der zentralen Achsen des ersten und des zweiten stabförmigen Elements sind und zu einer zweiten Drehrichtung des ersten und des zweiten stabförmigen Elements (2A, 12A) ausgerichtet sind, aufweisen.

6. Transfervorrichtung nach Anspruch 1 oder 2,
wobei der erste und der zweite Koppler (42A, 52A) Eingriffsstrukturen (162A, 172A) aufweisen, die ineinander eingreifen und
mindestens einer von dem ersten und dem zweiten Koppler (42A, 52A) ein elastisches Element (272A) aufweist, das sich zusammenzieht, wenn der erste und der zweite Koppler (42A, 52A) miteinander in Kontakt sind und der erste und der zweite Koppler (42A, 52A) einander nicht eingreifen.

7. Transfervorrichtung nach Anspruch 1 oder 2,
wobei der erste und der zweite Koppler (42A, 52A) Eingriffsstrukturen (182A, 192A) aufweisen, die ineinander eingreifen und
die Eingriffsstrukturen (182A, 192A) einen relativen Winkel zwischen dem ersten und dem zweiten Koppler (42A, 52A) ändern, indem sie mindestens eine Anziehungskraft zwischen verschiedenen Magnetpolen und eine Abstoßungskraft zwischen identischen Magnetpolen verwenden.

8. Transfervorrichtung nach einem der Ansprüche 1, 2 und 7,
wobei jeder von dem ersten und dem zweiten Koppler (42A, 52A) eine konvexe Oberfläche (282A, 292A), die einen ersten Magnetpol aufweist, und eine konkave Oberfläche (382A, 392A), die einen zweiten Magnetpol aufweist, aufweist.

9. Transfervorrichtung nach Anspruch 1 oder 2,
wobei das erste und das zweite stabförmige Element (2A, 12A) und das gegenüberliegende Element (3A) hartmagnetische Materialien beinhalten und,
wenn die Anzahl der Pole des ersten oder zweiten stabförmigen Elements (2A, 12A) und des gegenüberliegenden Elements (3A) jeweils 2n ist, wobei n eine natürliche Zahl darstellt, die ersten und zweiten Koppler (42A, 52A) konfiguriert sind, um bei jeder relativen Drehung um 360 x m/n Grad miteinander koppelbar sind, wobei m eine natürliche Zahl darstellt.

10. Transfervorrichtung nach Anspruch 1 oder 2,
wobei eines von dem ersten und dem zweiten stabförmigen Element (2A, 12A) und das gegenüberliegende Element (3A) ein hartmagnetisches Material und das andere ein weichmagnetisches Material beinhaltet, und
wenn die Anzahl der Pole des ersten oder zweiten stabförmigen Elements (2A, 12A) und des gegenüberliegenden Elements (3A) jeweils 2n ist, wobei n eine natürliche Zahl darstellt, die ersten und zweiten Koppler (42A, 52A) konfiguriert sind, um bei jeder relativen Drehung um 180 x m/n Grad miteinander koppelbar sind, wobei m eine natürliche Zahl darstellt.

## Revendications

1. Appareil de transfert comprenant :
un premier élément en forme de tige (2A) qui comprend un matériau magnétique, le premier élément en forme de tige (2A) étant pourvu d'un motif en spirale ;
un premier coupleur (42A) qui est fixé à une partie d'extrémité du premier élément en forme de tige (2A) ;
un second élément en forme de tige (12A) qui comprend un matériau magnétique, le second élément en forme de tige étant pourvu d'un motif en spirale ;
un second coupleur (52A) qui est fixé à une partie d'extrémité du second élément en forme de tige (12A), le premier élément en forme de tige (2A) et le second élément en forme de tige (12A) étant configurés pour être séparés l'un de l'autre ou couplés en série l'un à l'autre par l'intermédiaire des premier et second coupleurs (42A, 52A) pendant le fonctionnement de l'appareil de transfert, dans lequel lorsque les premier et second coupleurs (42A, 52A) sont couplés l'un à l'autre l'élément opposé (3A) peut se déplacer en douceur du premier élément en forme de tige (2A) au second élément en forme de tige (12A) ou du second élément en forme de tige (12A) au premier élément en forme de tige (2A), le second coupleur (52A) étant couplé au premier coupleur (42A) de manière à rendre constant un angle relatif entre le motif en spirale du premier élément en forme de tige (2A) et le motif en spirale du second élément en forme de tige (12A) lorsqu'ils sont couplés l'un à l'autre ; un élément opposé (3A) qui est opposé à des parties de surfaces latérales des premier et second éléments en forme de tige (2A, 12A), l'élément opposé (3A) comprenant un matériau magnétique ; et
un dispositif d'entraînement (14A) configuré pour entraîner le second élément en forme de tige pour qu'il tourne autour de son axe central, dans lequel lorsque le second élément en forme de tige (12A) est mis en rotation, le premier élément en forme de tige (2A) est également mis en rotation autour de son axe central dans l'état couplé, et pour déplacer l'élément opposé (3A) le long des premier et second éléments en forme de tige (2A, 12A), dans lequel une force d'entraînement est transmise entre les premier et second éléments en forme de tige (2A, 12A) et l'élément opposé (3A) d'une manière sans contact par une force magnétique.

2. Appareil de transfert selon la revendication 1,
dans lequel les premier et second coupleurs (42A, 52A) sont couplés l'un à l'autre en rapprochant les premier et second éléments en forme de tige l'un de l'autre tout en mettant en rotation au moins l'un des premier et second éléments en forme de tige (2A, 12A).

3. Appareil de transfert selon la revendication 1 ou 2,
dans lequel les premier et second coupleurs (42A, 52A) ont des structures en spirale (142A, 152A) qui viennent en prise l'une avec l'autre.

4. Appareil de transfert selon la revendication 3,
dans lequel une surface incurvée en spirale (252A) de la structure en spirale (152A) de l'un des premier et second coupleurs (42A, 52A) est pourvue d'une partie en saillie (452A) et une surface incurvée en spirale (242A) de la structure en spirale (142A) de l'autre des premier et second coupleurs (42A, 52A) est pourvue d'une partie concave (442A) dans laquelle la partie en saillie (452A) est insérée.

5. Appareil de transfert selon la revendication 3 ou 4,
dans lequel les premier et second coupleurs (42A, 52A) ont de premières surfaces plates (342A, 352A) qui sont parallèles aux directions des axes centraux des premier et second éléments en forme de tige et orientées vers une première direction de rotation des premier et second éléments en forme de tige (2A, 12A) et de secondes surfaces plates (542A, 552A) qui sont parallèles aux directions des axes centraux des premier et second éléments en forme de tige et orientées vers une seconde direction de rotation des premier et second éléments en forme de tige (2A, 12A).

6. Appareil de transfert selon la revendication 1 ou 2,
dans lequel les premier et second coupleurs (42A, 52A) ont des structures de mise en prise (162A, 172A) qui viennent en prise les unes avec les autres et
au moins un des premier et second coupleurs (42A, 52A) a un élément élastique (272A) qui se contracte lorsque les premier et second coupleurs (42A, 52A) viennent en contact l'un avec l'autre et que les premier et second coupleurs (42A, 52A) ne viennent pas en prise l'un avec l'autre.

7. Appareil de transfert selon la revendication 1 ou 2,
dans lequel le premier et le second coupleur (42A, 52A) ont des structures de mise en prise (182A, 192A) qui viennent en prise l'une avec l'autre et
les structures de mise en prise (182A, 192A) modifient un angle relatif entre les premier et second coupleurs (42A, 52A) en utilisant au moins une force d'attraction entre des pôles magnétiques différents et une force de répulsion entre des pôles magnétiques identiques.

8. Appareil de transfert selon l'une quelconque des revendications 1, 2 ou 7,
dans lequel chacun des premier et second coupleurs (42A, 52A) a une surface convexe (282A, 292A) ayant un premier pôle magnétique et une surface concave (382A, 392A) ayant un second pôle magnétique.

9. Appareil de transfert selon la revendication 1 ou 2,
dans lequel les premier et second éléments en forme de tige (2A, 12A) et l'élément opposé (3A) comprennent des matériaux magnétiques durs et,
lorsque le nombre de pôles de chacun, du premier ou du second élément en forme de tige (2A, 12A) et de l'élément opposé (3A) est 2n, où n représente un nombre naturel, les premier et second coupleurs (42A, 52A) sont configurés pour pouvoir être couplés l'un à l'autre à chaque rotation relative de 360 x m/n degrés, où m représente un nombre naturel.

10. Appareil de transfert selon la revendication 1 ou 2,
dans lequel l'un des premier et second éléments en forme de tige (2A, 12A) et de l'élément opposé (3A) comprend un matériau magnétique dur et l'autre comprend un matériau magnétique doux ; et,
lorsque le nombre de pôles de chacun, du premier ou du second élément en forme de tige (2A, 12A) et de l'élément opposé (3A) est 2n, où n représente un nombre naturel, les premier et second coupleurs (42A, 52A) sont configurés pour pouvoir être couplés l'un à l'autre à chaque rotation relative de 180 x m/n degrés, où m représente un nombre naturel.
